Europäisches Patentamt

European Patent Office

Office européen des brevets

(19)

(11) Veröffentlichungsnummer: **0 030 995**

**A2**

(12)
# EUROPÄISCHE PATENTANMELDUNG

(21) Anmeldenummer: 80102938.0

(22) Anmeldetag: 27.05.80

(51) Int. Cl.³: **G 01 K 17/14**

(30) Priorität: 06.12.79 DE 2949008

(43) Veröffentlichungstag der Anmeldung:
01.07.81 Patentblatt 81 26

(84) Benannte Vertragsstaaten:
AT BE CH DE FR GB IT LI LU NL SE

(71) Anmelder: Opitz, Walter
Sven-Hedin-Strasse 21
D-3000 Hannover 51(DE)

(72) Erfinder: Opitz, Walter
Sven-Hedin-Strasse 21
D-3000 Hannover 51(DE)

(54) Mechanische Zählvorrichtung zur Wärmemengenbestimmung insbesondere für Zentralheizungen.

(57) Mechanische Zählvorrichtung zur Wärmemengenbestimmung insbesondere für Zentralheizung, welche im Transportsystem des Energieträgermediums einer Heizeinrichtung (z.B. Zentralheizung ) angeordnet ist. Dabei wird im Transportrohr des Energieträgermediums ein Rotorkörper (3) angebracht, dessen Umdrehungen über ein starres Untersetzungsgetriebe (13,7) auf ein addierendes Zählwerk (9) mittels Zahnräder (12,7) übertragen werden. Das Addierwerk (9) ist in einem getrennten Gehäuseteil (1) untergebracht. Zwischen den Übertragungselementen der Messwerte besteht eine selbsttätig lös-bzw. herstellbare formschlüssige Verbindung (11,12). Ziel der Erfindung ist, eine mechanische Zählvorrichtung zur Wärmemengenbestimmung, die exakt und wartungsfrei über lange Zeit arbeitet, zu beschreiben. Der Einfluß der Umgebungstemperatur sowie Justierungsungenauigkeiten sollen ausgeschaltet und eine direkte Messung des Energieträgers ermöglicht werden. Das Meßgerät ist eichfähig und die Ergebnisse exakt reproduzierbar.

Fig 1

Walter Opitz

Sven-Hedin-Str. 21

3000 Hannover 51

Mechanische Zählvorrichtung zur Wärmemengenbestimmung ...

Die Erfindung bezieht sich auf eine mechanische Zählvorrichtung zur Wärmemengenbestimmung insbesondere für Zentralheizungen oder zur Warmwasserverbrauchsmessung, welche im Transportsystem des Energieträgermediums einer Heizeinrichtung angeordnet ist.

Derartige direkt bzw. indirekt messende Zählwerke sollen insbesondere in großen Wohnanlagen die verbrauchten Warmwassermengen möglichst exakt erfassen, so daß die Ungerechtigkeiten einer Pauschalberechnung umgangen werden können. So soll die einem Heizkörper bzw. einem Heizkörpersystem ( Etagenheizung ) gelieferte und zu berechnende Wärmemenge erfaßt und über den gesamten Verbrauchszeitraum möglichst exakt summiert werden. Das gleiche gilt für die an den dafür vorgesehenen Zapfstellen verbrauchte Warmwassermenge.

Das Meßsystem soll möglichst unabhängig von der Umgebungstemperatur sowie anderen störenden Einflüssen wie z.B. stark wechselnde Verbrauchsmengen des Energieträgermediums über einen langen Zeitraum präzise arbeiten.

Es ist bekannt zur Lösung dieser Probleme Verdunstungs-Wärmemengenmesser zu benutzen, die z.B. in PS 1083 067 beschrieben werden. Hier wird ein Meßgerät mit linearer Meßskala beschrieben, bei dem das Gehäuse aus zwei Teilen besteht, welche die Vorder- und Rückfront bilden.

Sie tragen das dazwischen gelegte Meßrohr, in welchem sich ein hochsiedender Alkohol befindet. Der Erfindungsgedanke beruht darin, das Meßrohr möglichst eindeutig zu justieren, damit die Meßfehler durch Verschiebung so gering wie möglich gehalten werden. Die verdunstete Alkoholmenge aus dem Meßrohr dient als Vergleichsmaß für die verbrauchte Wärmemenge. Derartige Geräte sind jedoch wie aus der Literatur hervorgeht, sehr ungenau, so daß dieser Gerätetyp bei den Baugesellschaften nur als Hilfsmeßvorrichtung herangezogen werden kann.

Eine etwas verbesserte Version des vorstehend beschriebenen Verdunstungs-Wärmemengenmessers wird im GM 7822969 beschrieben. Geschützt werden soll hierbei das Gehäuse, welches aus einem Rückteil sowie einem Vorderteil besteht, wobei die Meßampulle zwischen beiden aufgenommen wird. Am Vorderteil bzw. an den Seitenwänden des Gehäuses ist ein reversibler Thermometerstreifen befestigt, der mehrere um jeweils $5^{\circ}$ C springende, aneinandergereihte Farbfelder aufweist.

Der Anmelder geht von der richtigen Annahme aus, daß sich die Meßflüssigkeit bei der Erwärmung stark ausdehnt und in diesem Zustand abgelesen wird.

Eine korrekte Aussage über den Wärmeverbrauch ist so nicht möglich, da die Aufheizungsgrade der verschiedenen Wohnungsheizungen naturgemäß unterschiedlich sind. Der Thermometerstreifen hat nun die Aufgabe, die zur Zeit der Ablesung vorhandene Temperatur der Meßflüssigkeit anzuzeigen. Es wird nun vorgeschlagen mit Hilfe dieses Temperatur-Korrekturwertes die Ableseergebnisse über eine elektronische Datenanlage zu korrigieren.

0030995

Selbst dieser hohe Meßaufwand mit seinen zusätzlichen Fehler- bzw. Rechenfehlermöglichkeiten, kann die systembedingten Nachteile der Verdunstungsmessung nicht beseitigen. Prüfungen der Verdunstungsmesser zeigen z. B. folgende Erkenntnisse:

" unter gleichen Bedingungen zeigte der Wärmemesser in einem beheizten Raum mit geöffneten Fenstern einen geringeren Verbrauch an als das Gerät in einem Zimmer mit geschlossenen Fenstern ... Hierzu kommt, daß die Wärmemesser den Wärmeübergang von einer warmen zu einer benachbarten kalten Wohnung unberücksichtigt lassen ..."
( Die Zeit, Nr.: 37, Seite 25 )

Bei einer weiteren bekannten Ausführrungsform wird im Vor- oder Rücklauf des Wärmeträgers einer Heizeinrichtung ein Flügelrad angeordnet, das mittels Magnetkupplung über ein temperaturgesteuertes hydraulisches Getriebe das Zählwerk kraftschlüssig mit dem Flügelrad koppelt. Die zwei hydraulischen Kupplungsteile sind nach Art der Rotationsviskosimeter konzipiert und wirken einander entgegen. Das eine wird vom Vorlauf, das andere vom Rücklauf aufgeheizt. Da hier lediglich eine kraft- und keine formschlüssige Verbindung besteht und darüber hinaus die Abstände für die Wirkung der Magnetkräfte zu groß gewählt wurden, kann eine schlupffreie Funktion nicht erwartet werden. Der Systemfehler ist derart groß, daß ein exakter Betrieb nicht möglich erscheint.

Bekannt ist auch ein weiterer Wärmemengenzähler aus der OS 2 716 787. Er wird vom Wärmeträgermedium durchströmt und besitzt zwei Temperaturmeßfühler, die am Vorlauf und Rücklauf angeordnet sind. Zusätzlich wird eine Vorrichtung zur Wirbelerzeugung benötigt, mit der dem Strom des Wärmeträgermediums eine nichtaxiale Geschwindigkeitskomponente vermittelbar ist.

Ferner wird eine koaxial in der Leitung sitzende Turbine benötigt, der eine Zählvorrichtung zugeordnet ist. Die Wirbelerzeugungseinrichtung wird durch die Meßfühler im Vorlauf und Rücklauf derart angesteuert, daß die Anzahl der Turbinenumdrehungen dem Produkt aus der Strömungsmenge und der Temperaturdifferenz entspricht. Die verbrauchte Wärmemenge kann somit direkt abgelesen werden.

Das Gerät mag brauchbar funktionieren so lange es von einem Fachmann justiert und gewartet wird. Bei den geringsten Ablagerungen verändern sich die Strömungskomponenten des wirbelnden Wassers und ergeben somit einen nicht nachprüfbaren Systemfehler. Für einen wartungsfreien jahrelangen Dauergebrauch ist diese Konstruktion mit Sicherheit nicht geeignet.

Die bekannten Lösungen sind entweder - wie die Verdunstungs-Wärmemengenmesser - prinzipiell ungenau und ergeben keine reproduzierbaren Messwerte oder sie sind wie die beschriebenen Flügelrad-Meßsysteme technisch derart kompliziert, daß eine störungsfreie sichere Funktion mit ausreichender Meßgenauigkeit nicht realisierbar ist.

Der Erfindung liegt die Aufgabe zugrunde, eine mechanische Zählvorrichtung zur Wärmemengenbestimmung zu beschreiben, die exakt und wartungsfrei über lange Zeit betrieben werden kann. Der Einfluß der Umgebungstemperatur sowie Justierungsungenauigkeiten von Meßelementen sollen ausgeschaltet und eine direkte Messung des Energieträgers möglich sein.

**0030995**

Das Meßgerät muß eichfähig und die Ergebnisse exakt reproduzierbar sein. Darüber hinaus soll eine einmalige Installation ohne periodisch auszuwechselnde bzw. verschleißende Teile ermöglicht werden.

Diese Aufgabe wird erfindungsgemäß dadurch gelöst, daß im Transportrohr des Energieträgermediums ein Rotorkörper (3) angebracht ist, dessen Umdrehungen über ein starres Untersetzungsgetriebe (13,7) auf ein addierendes Zählwerk (9) mittels Zahnräder (12,7) übertragen werden, wobei das Addierwerk (9) in einem von der Mengenzähleinheit getrennten Gehäuseteil (1) untergebracht ist und zwischen den Übertragungselementen der Meßwerte eine selbsttätig lös- bzw. herstellbare formschlüssige Verbindung (11,12) besteht.

Um eine ausreichende Korrosionsbeständigkeit der mechanischen Zählvorrichtung sicherzustellen, ist es in einer Ausbildung der Erfindung sinnvoll, Unterteil bzw. Oberteil aus Grauguß herzustellen.

In einer weiteren Ausbildung des erfindungsgemäßen Gegenstandes kann als Material auch Rotguß, Messing, Aluminium oder auch heißwasserbeständiger Kunststoff z.B. PE benutzt werden. Es sollte auf jeden Fall darauf geachtet werden, daß zwischen der Rohrleitung und dem Material der mechanischen Zählvorrichtung kein spürbares elektrolytisches Spannungsgefälle entsteht.

Versuche haben gezeigt, daß bei hohen Wassergeschwindigkeiten und geraden Flügelzahlen des Flügelrades (3) störende, wenn auch geringfügige Resonanzen auftreten, welche zu Verschleißerscheinungen in der Lagerung führen. Bei einer Variation der Erfindung wird deshalb mit ungeraden Flügelzahlen vorzugsweise mit 5 Flügeln gearbeitet.

Um die Montage zu vereinfachen, wird vorgeschlagen, beide Enden mit Normgewinde (z.B. 3/4") auszustatten, um mittels Überwurfmuttern oder bekannten Zwischenstücken eine Verbindung zum vorhandenen Rohrleitungssystem herzustellen.

Um die Lebensdauer des mechanischen Zählsystems zu erhöhen, soll die Achse (4) des Flügelrades (3) aus nitriertem Stahl gefertigt werden. Durch die hohe Oberflächenhärte kann einerseits die Verschleißfestigkeit optimiert auf der anderen Seite ein Verziehen vermieden werden, das vorzugsweise bei der Härtung hochwertiger Stähle auftritt.

Um die mechanische Zählvorrichtung wartungsfrei zu gestalten, wurde mit einer wassergeschmierten Lagerung, gekennzeichnet durch die Lagerkombination Stahl in Polyäthylen-Schalen gearbeitet.

Ein Problem stellt die Abdichtung des Innenraumes (6) des Untersetzungsgetriebes (7) dar. Wenn an der Dichtungsstelle (5) keine großen Reibkräfte auftreten sollen, muß mit eindringendem Wasser gerechnet werden. Dies führt jedoch erfahrungsgemäß auch zu Ablagerungen bzw. Korrosionserscheinungen an den Kleinteilen des Getriebes. In einer Ausführung der Erfindung wird deshalb vorgeschlagen, daß die Zahnräder (7) und Dichtungen (5) derart enge Arbeitsspalte besitzen, daß vorzugsweise niedrigviskoses Oel benutzt wird. Bei einem spezifischen Gewicht unter 1 wird sichergestellt, daß das nachdringende Wasser, welches unterhalb der Dichtungsstelle (5) über eine Ausgleichsbohrung den Raum der Übertragungswelle (13) ausfüllen bzw. verlassen kann, gegen das darüber gelagerte Oel-polster (6) stößt
und bedingt durch die verschiedenen spezifischen Gewichte nicht eindringen kann.

Um eine hohe Meßgenauigkeit der Zählvorrichtung zu gewährleisten, (bei der Umrechnung in den Wärmeverbrauch)
wird erfindungsgemäß vorgeschlagen, einen Regelthermostat
im Heizungssystem zu benutzen. Hierdurch wird verhindert,
daß dem Heizkörper überschüssige, nicht in Raumheizung
umzusetzende Energie zugeführt wird. Es empfiehlt sich
erfindungsgemäß bei einer weiteren Variante die Zählvorrichtung vor jeden Heizkörper zu schalten.

In einer weiteren Ausführungsform der Erfindung wird das
Kegelrad (11) an die Achse (4) des Flügelrades angearbeitet.
Es ist jedoch ohne weiteres möglich, die Achse (4) mit
dem Kegelrad (11) - welches nicht den Durchmesser der Achse
besitzen muß - durch ein bekanntes Mittel wie z.B. Kleben,
Hartlöten usw. zu verbinden. Auch formschlüssige Verbindungen sind möglich.

In einer weiteren Ausführungsform hat es sich als sinnvoll
herausgestellt, im Unterteil (2) der mechanischen Zählvorrichtung vor dem Gewindestück (10) den Sitz für ein bekanntes Thermostatventil mit einzugießen bzw. ( bei Kunststoffausführung ) mit anzuspritzen.

Ein Ausführungsbeispiel der Erfindung ist in der Zeichnung
dargestellt und wird im folgenden näher beschrieben.
Es zeigen:

Figur 1: Die geschnittene Seitenansicht der mechanischen Zählvorrichtung mit Messraum und
Flügelrad.

Figur 2: Schnitt der Vorderansicht mit Übertragungswelle und Untersetzungsgetriebe.

Figur 3: Draufsicht mit der Anzeige des Addierwerkes.

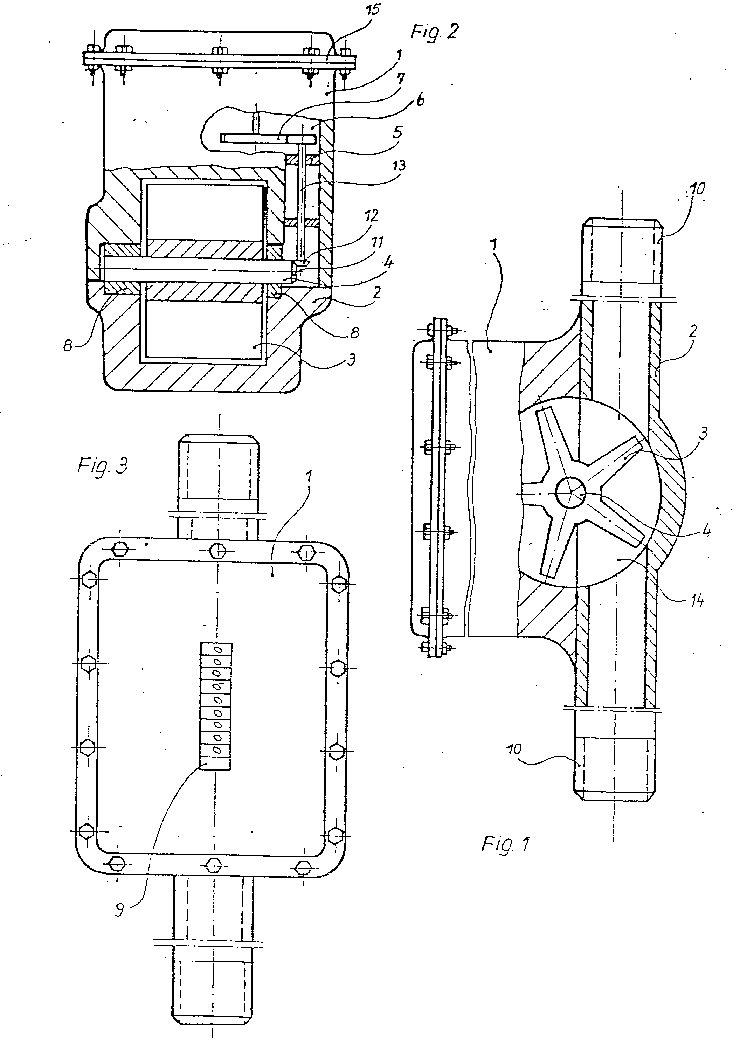

Figur 1: Das Flügelrad (3), welches auf der Achse (4) sitzt, füllt den Durchfluß- bzw. Meßraum (14) möglichst spaltfrei aus. Hierdurch soll eine Minimierung der Schlupfverluste sichergestellt sein. Das Oberteil (1) wird mittels Plattendichtung auf das Unterteil (2) aufgesetzt und formschlüssig verbunden. Beide Enden (10) des Durchflußrohres sind mit Normgewinde versehen, um eine schnelle und sichere Verbindung zur Rohrleitung herzustellen.

Figur 2: Das vorzugsweise fünfflügelige Flügelrad (3) sitzt mit seiner Stahlachse (4) in Kunststofflagerschalen (8). An der Stirnseite der Achse (4) ist ein Kegelrad bzw. eine Kegelverzahnung (11) angebracht, welche über ein weiteres Kegelrad (12) über die Welle (13) auf das im Oberteil (1) befindliche Untersetzungsgetriebe (7) wirkt. Dieses Untersetzungsgetriebe (7) ist in Oel gelagert und betätigt das zeichnerisch nicht dargestellte Addierwerk, welches die Meßwerte über den Verbrauchszeitraum hin summiert. Das Oberteil (1) ist mit einer Deckplatte versehen, die über Dichtung und Befestigungselemente (15) absolut luft-und oeldicht verklemmt ist.

Figur 3: In der Draufsicht auf die mechanische Zählvorrichtung ist die Anzeige des Addierwerkes dargestellt. Das Fenster wird in bekannter Weise
aus einem wärmebeständigen Glas bzw. Kunststoff
gebildet, wobei eine funktionsfähige und sichere
Abdichtung hergestellt werden muß.

Die erfindungsgemäßen Vorteile vorliegender Anmeldung bestehen vor allem darin, daß über eine direkte Messung des
Energieträgermediums die Einflüsse der Umwelt bzw. der
Handhabung (Umgebungstemperatur usw.) ausgeschaltet wurden.
Die Messungen sind exakt reproduzierbar, das Gerät ist
eichfähig und funktioniert über lange Zeiträume wartungsfrei
mit hoher Messgenauigkeit. Darüber hinaus sind keinerlei
periodisch verschleißende Auswechselteile vorgesehen, so daß
eine einmalige Installation ausreichend ist und die Ablesung
durch den Wohnungsinhaber vorgenommen werden kann.

Walter Opitz

Sven-Hedin-Str. 21

3000 Hannover 51

P A T E N T A N S P R Ü C H E

1.) Mechanische Zählvorrichtung zur Wärmemengenbestimmung insbesondere für Zentralheizungen oder zur Warmwasserverbrauchsmessung, welche im Transportsystem des Energieträgermediums einer Heizeinrichtung angeordnet ist

d a d u r c h   g e k e n n z e i c h n e t,

daß im Transportrohr des Energieträgermediums ein Rotorkörper (3) angebracht ist, dessen Umdrehungen über ein starres Untersetzungsgetriebe (13,7) auf ein addierendes Zählwerk (9) mittels Zahnräder (12,7) übertragen werden, wobei das Addierwerk (9) in einem von der Mengenzähleinheit getrennten Gehäuseteil (1) untergebracht ist und zwischen den Übertragungselementen der Meßwerte eine selbsttätig lös- bzw. herstellbare formschlüssige Verbindung (11,12) besteht.

2.) Mechanische Zählvorrichtung nach Anspruch 1

d a d u r c h   g e k e n n z e i c h n e t,

daß das Gehäuseoberteil (1) sowie das Gehäuseunterteil (2) aus Grauguß gefertigt sind.

3.) Mechanische Zählvorrichtung nach Anspruch 1

d a d u r c h   g e k e n n z e i c h n e t,

daß das Gehäuseoberteil (1) und das Gehäuseunterteil (2) aus Messing gefertigt sind.

4.) Mechanische Zählvorrichtung nach Anspruch 1

d a d u r c h   g e k e n n z e i c h n e t

daß das Gehäuseoberteil (1) und das Gehäuseunterteil (2) aus Aluminium gefertigt sind.

5.) Mechanische Zählvorrichtung nach Anspruch 1

d a d u r c h   g e k e n n z e i c h n e t ,

daß das Gehäuseoberteil (1) und das Gehäuseunterteil (2) aus heißwasserbeständigem Kunststoff z.B. PE gefertigt sind.

6.) Mechanische Zählvorrichtung nach einem oder mehreren der Ansprüche 1 bis 5

d a d u r c h   g e k e n n z e i c h n e t ,

daß das Flügelrad (3) eine ungerade Flügelzahl besitzt.

7.) Mechanische Zählvorrichtung nach einem oder mehreren der Ansprüche 1 bis 6

d a d u r c h   g e k e n n z e i c h n e t ,

daß das Flügelrad vorzugsweise 5 Flügel besitzt.

8.) Mechanische Zählvorrichtung nach einem oder mehreren der Ansprüche 1 bis 7

d a d u r c h   g e k e n n z e i c h n e t,

daß das Unterteil (2) an seinen Enden (10) Normgewinde
besitzt, die eine einfache Verbindung mit vorhandenen
Stahlrohrleitungen ermöglichen.

9.) Mechanische Zählvorrichtung nach einem oder mehreren
der Ansprüche 1 bis 8

d a d u r c h   g e k e n n z e i c h n e t,

daß die Achse (4) des Flügelrades (3) aus oberflächengehärtetem (z.B. nitriertem ) Stahl gefertigt wird.

10.) Mechanische Zählvorrichtung nach einem oder mehreren
der Ansprüche 1 bis 9

d a d u r c h   g e k e n n z e i c h n e t,

daß die Achse des Flügelrades (4) in Kunstoff-Gleitlagern
aus PE geführt wird.

11.) Mechanische Zählvorrichtung nach einem oder mehreren
der Ansprüche 1 bis 10

d a d u r c h   g e k e n n z e i c h n e t,

daß die Zahnräder (7) und Dichtungen (5) derart enge
Arbeitsspalten besitzen, daß vorzugsweise niedrigviskoses Oel benutzt wird.

12.) Mechanische Zählvorrichtung nach einem oder mehreren
der Ansprüche 1 bis 11

d a d u r c h   g e k e n n z e i c h n e t ,

daß sie mit einem Regelthermostat verbunden ist.

13.) Mechanische Zählvorrichtung nach einem oder mehreren der Ansprüche 1 bis 12

d a d u r c h   g e k e n n z e i c h n e t ,

daß sie vor jeden Heizkörper eines Zentralheizungssystems geschaltet ist.

14.) Mechanische Zählvorrichtung nach einem oder mehrerer der Ansprüche 1 bis 13

d a d u r c h   g e k e n n z e i c h n e t ,

daß das Kegelrad (11) an die Achse (4) des Flügelrades (3) angearbeitet wird.

15.) Mechanische Zählvorrichtung nach einem oder mehrerer der Ansprüche 1 bis 14

d a   d u r c h   g e k e n n z e i c h n e t ,

daß das Kegelrad (11) an die Achse (4) des Flügelrades (3) durch Klebung oder durch bekannte Formschluß- bzw. Kraftschlußmittel angebracht ist.

16.) Mechanische Zählvorrichtung nach einem oder mehreren der Ansprüche 1 bis 15

d a d u r c h   g e k e n n z e i c h n e t ,

daß im Unterteil (2) zwischen dem Laufbereich (14) des Flügelrades (3) und dem Gewindestück (10) ein Thermostat mit eingegossen ist.

0030995

Fig. 2

Fig. 3

Fig. 1